# FASCICULE DE BREVET EUROPEEN

(11) **EP 3 962 960 B1**
(45) Date de publication et mention de la délivrance du brevet: **28.01.2026**
(21) Numéro de dépôt: 20724441.9
(22) Date de dépôt: 04.05.2020
(51) Int. Cl.: C08B 15/02, C08L 1/04

(54) **PROCÉDÉ DE FABRICATION D'UNE SUSPENSION DE NANOFIBRILLES DE CELLULOSE**
VERFAHREN ZUR HERSTELLUNG EINER SUSPENSION VON CELLULOSE-NANOFIBRILLEN
METHOD FOR MANUFACTURING A SUSPENSION OF CELLULOSE NANOFIBRILS

(30) Priorité: 02.05.2019 FR 1904639
(43) Date de publication de la demande: 09.03.2022
(73) Titulaire: Institut Polytechnique de Grenoble, 38000 Grenoble (FR); Centre Technique De L'industrie Des Papiers, Cartons Et Celluloses, 38610 Gieres (FR); Université Grenoble Alpes, 38400 Saint Martin d'Hères (FR); Centre National de la Recherche Scientifique, 75016 Paris (FR)
(72) Inventeur: BRAS, Julien, 38410 SAINT MARTIN D'URIAGE (FR); ROL, Fleur, 84850 CAMARET-SUR-AIGUES (FR); PETIT-CONIL, Michel, 38000 GRENOBLE (FR); MEYER, Valérie, 38400 SAINT MARTIN D'HÈRES (FR)
(74) Mandataire: Hautier IP
(86) Numéro de dépôt international: PCT/EP2020/062284
(87) Numéro de publication internationale: WO 2020/221934

(56) Documents cités:
- JP-A- 2017 025 123
- ROL FLEUR ET AL: "Recent advances in surface-modified cellulose nanofibrils", PROGRESS IN POLYMER SCIENCE, PERGAMON PRESS, OXFORD, GB, vol. 88, 6 September 2018 (2018-09-06), pages 241 - 264, XP085570263, ISSN: 0079-6700, DOI: 10.1016/J.PROGPOLYMSCI.2018.09.002
- HO THAO THI ET AL: "Nanofibrillation of pulp fibers by twin-screw extrusion", CELLULOSE, SPRINGER NETHERLANDS, NETHERLANDS, vol. 22, no. 1, 14 December 2014 (2014-12-14), pages 421 - 433, XP035433468, ISSN: 0969-0239, [retrieved on 20141214], DOI: 10.1007/S10570-014-0518-6

## Description

### DOMAINE TECHNIQUE

L'invention concerne le domaine de la production d'une suspension de micro/nanofibrilles de cellulose à partir d'une suspension aqueuse de fibres de cellulose. Elle trouve des applications particulièrement avantageuses dans les domaines de l'emballage, la peinture, le papier ou la médecine.

### ÉTAT DE LA TECHNIQUE

La cellulose est le polymère le plus abondant sur Terre et possède de solides avantages pour remplacer les produits d'origine fossile. En effet, il s'agit d'un matériau biosourcé, renouvelable, durable et biocompatible. À l'échelle nanométrique, les fibres de cellulose présentent des propriétés supplémentaires qui les rendent très attractives. Les films de nanofibrilles de cellulose ou de microfibrilles de cellulose (CNF pour « cellulose nanofibers » et MFC pour « microfibrillated cellulose » selon la terminologie anglo-saxonne) sont transparents et possèdent des propriétés mécaniques élevées. Les CNF possèdent également des propriétés barrière telles que barrière contre la graisse, l'oxygène, aux arômes ou aux contaminants. La production industrielle de CNF a débuté en 2011, mais les quantités produites sont toujours faibles à cause du coût de fabrication (forte consommation énergétique, coût de la matière première, produits chimiques) et également à cause du coût de transport (du fait de la faible concentration en matière sèche des suspensions produites). En effet, les suspensions de micro/nanofibrilles de cellulose sont actuellement produites à une concentration comprise entre 2% et 5% en matière sèche, soit 98% à 95% d'eau. Les suspensions à 2% se comportent comme un gel et il est très difficile d'en évacuer l'eau. De ce fait, la majorité de la matière transportée est de l'eau, créant par la même occasion des problèmes de stockage.

Les micro/nanofibrilles de cellulose sont souvent produites via un prétraitement enzymatique ou chimique des fibres de cellulose suivi d'un traitement mécanique permettant d'isoler les micro/nanofibrilles. Un prétraitement chimique ou enzymatique est nécessaire pour affaiblir les liaisons hydrogène entre les fibres en modifiant les groupes OH et ainsi faciliter la séparation des CNF. En fonction du prétraitement utilisé, il est possible d'obtenir des CNF de différentes qualités. Les prétraitements chimiques permettent de produire des CNF de meilleure qualité et plus petites. De nombreuses études ont été menées sur la modification chimique de la cellulose pour la nanofibrillation, comme récemment décrites par Rol et al. (Rol, F.; Belgacem, M. N.; Gandini, A.; Bras, J. Recent Advances in Surface-Modified Cellulose Nanofibrils. Prog. Polym. Sci. 2018). L'oxydation TEMPO (Isogai, A.; Saito, T.; Fukuzumi, H. TEMPO-Oxidized Cellulose Nanofibers. Nanoscale 2011, 3 (1), 71-85), la carboxyméthylation (Naderi, A.; Lindström, T.; Sundström, J. Carboxymethylated Nanofibrillated Cellulose: Rheological Studies. Cellulose 2014, 21 (3), 1561-1571) et la cationisation (Saini, S.; Yücel Falco, Ç.; Belgacem, M. N.; Bras, J. Surface Cationized Cellulose Nanofibrils for the Production of Contact Active Antimicrobial Surfaces. Carbohydr. Polym. 2016, 135, 239-247) sont les prétraitements les plus utilisés. Les prétraitements chimiques de la cellulose conduisent à des CNF fonctionnalisées qui permettent d'utiliser ces CNF pour une modification ultérieure et qui possèdent des propriétés supplémentaires. Par exemple, on sait que les CNF cationiques ont des propriétés antimicrobiennes, tandis que les CNF phosphorylés (Ghanadpour, M.; Carosio, F.; Larsson, P. T.; Wågberg, L. Phosphorylated Cellulose Nanofibrils: A Renewable Nanomaterial for the Preparation of Intrinsically Flame-Retardant Materials. Biomacromolecules 2015, 16 (10), 3399-3410) présentent des propriétés ignifuges.

Des CNF fonctionnalisées peuvent également être produites via une oxydation au périodate. L'oxydation au périodate crée des groupements aldéhydes sur les fibres de cellulose, ce qui permet d'améliorer la nanofibrillation et de greffer d'autres molécules. Par exemple, Larsson et al. (Larsson, P. A.; Berglund, L. A.; Wågberg, L. Highly Ductile Fibres and Sheets by Core-Shell Structuring of the Cellulose Nanofibrils. Cellulose 2013, 21 (1), 323-333) ont isolé les CNF après oxydation au periodate et réduction au borohydrure de sodium. Des CNF de bonne qualité peuvent également être produites après une oxydation au periodate suivie d'une oxydation au chlorite (Liimatainen, H.; Visanko, M.; Sirviö, J. A.; Hormi, O. E. O.; Niinimaki, J. Enhancement of the Nanofibrillation of Wood Cellulose through Sequential Periodate-Chlorite Oxidation. Biomacromolecules 2012, 13 (5), 1592-1597). Sirvio et al. (Sirviö, J. A.; Anttila, A.-K.; Pirttilä, A. M.; Liimatainen, H.; Kilpeläinen, I.; Niinimäki, J.; Hormi, O. Cationic Wood Cellulose Films with High Strength and Bacterial Anti-Adhesive Properties. Cellulose 2014, 21 (5), 3573-3583) ont produit des CNF cationiques par oxydation au périodate, puis par réaction avec le réactif de Girard. Ainsi, l'oxydation au périodate a récemment été développée pour la nanofibrillation de fibres de cellulose et permet de produire des CNF de haute qualité. Cependant, l'industrialisation de ce procédé ne semble pas réaliste en raison de la durée du processus (plusieurs jours) et des produits toxiques utilisés.

L'ozone permet également de créer des groupements carbonyles sur les fibres de cellulose et apparaît comme une meilleure option industrielle. En effet, l'ozone est bon marché, non toxique, disponible à grande échelle et déjà utilisé pour le blanchiment des pâtes à papier (ou « pulp » selon la terminologie anglo-saxonne). Le document de brevet US 2015/0167243 A1 propose un procédé écoénergétique évolutif de préparation de nanofibres de cellulose utilisant un mélange d'ozone et d'enzyme. Une réduction du degré de polymérisation de la cellulose et une diminution de la consommation d'énergie d'au moins 8% ont été signalées. Un autre document de brevet WO 2014/029909 divulgue que la paroi primaire de fibres de cellulose peut également être éliminée par ozonation avant la nanofibrillation dans un homogénéisateur ou un microfluidiseur. Il est encore connu, du document de brevet US 7,700,764 B2, un procédé de production de polysaccharide microfibrillaire tel que la cellulose utilisant un oxydant (0,1 à 5% en poids) sous forme d'ozone ou de peroxyde d'hydrogène et un métal de transition comme le fer (jusqu'à 20% en poids sur la base du poids de l'oxydant). Plus récemment, Beheshti Tabar et al. (Beheshti Tabar, I.; Zhang, X.; Youngblood, J. P.; Mosier, N. S. Production of Cellulose Nanofibers Using Phenolic Enhanced Surface Oxidation. Carbohydr. Polym. 2017, 174, 120-127) ont isolé les CNF en utilisant une enzyme et de l'ozone en présence de composés phénoliques dérivés de la lignine afin de créer des groupements carbonyles sur les fibres de cellulose. L'ozone apparaît donc comme un nouveau prétraitement encourageant, réalisable industriellement. La réaction peut se faire à température ambiante, à forte teneur en fibres sèches et n'implique pas de produit toxique.

Par ailleurs, il a été récemment suggéré d'utiliser pour produire des nanofibrilles de cellulose à haute teneur en fibres sèches et avec un rendement énergétique optimal une extrudeuse bi-vis (Cf. notamment le document de brevet WO 2011/051882 (A1)). Ho et al. (Ho, T. T. T.; Abe, K.; Zimmermann, T.; Yano, H. Nanofibrillation of Pulp Fibers by Twin-Screw Extrusion. Cellulose 2014, 22 (1), 421-433) ont été les premiers à produire des CNF avec une teneur en matière sèche comprise entre 33 et 45% en poids à partir de fibres non traitées en utilisant une combinaison de vis de convoyage et des éléments malaxeurs. Plus récemment, Rol et al. (Rol, F.; Karakashov, B.; Nechyporchuk, O.; Terrien, M.; Meyer, V.; Dufresne, A.; Belgacem, M. N.; Bras, J. Pilot Scale Twin Screw Extrusion and Chemical Pretreatment as an Energy Efficient Method for the Production of Nanofibrillated Cellulose at High Solid Content. ACS Sustain. Chem. Eng. 2017) ont montré que l'énergie peut être réduite de 63% en utilisant une extrudeuse bi-vis au lieu d'un broyeur ultrafin sans dégrader la qualité des CNF produites. Enfin, Baati et al. (Baati, R.; Magnin, A.; Boufi, S. High Solid Content Production of Nanofibrillar Cellulose via Continuous Extrusion. ACS Sustain. Chem. Eng. 2017) ont signalé une faible consommation d'énergie pour produire des CNF TEMPO à l'aide d'une micro-extrudeuse conique.

Le document JP 2017025123 A divulgue un procédé d'obtention d'une suspension de nanofibrilles de cellulose comprenant un traitement chimique d'une suspension aqueuse de fibres de cellulose, un séchage des fibres de cellulose traitées chimiquement, une suspension de ces fibres dans de l'eau chaude, puis une dispersion par traitement mécanique de ces fibres. Ce procédé reste toutefois complexe à mettre en œuvre, et le séchage suivi d'une re-suspension est coûteux en énergie et limite la qualité de la suspension de CNF produite.

Cependant, il existe toujours un besoin d'optimisation de la production de CNF.

Un objet de la présente invention est donc de proposer un procédé optimisé de production d'une suspension de micro/nanofibrilles de cellulose à partir d'une suspension aqueuse de fibres de cellulose.

Un autre objet de la présente invention est de proposer un procédé permettant de produire des micro/nanofibrilles de cellulose de qualité, à fort taux de matière sèche, en consommant peu d'énergie. Produire des suspensions de CNF/CMF plus concentrées limiterait le coût de transport, tout en élargissant le domaine d'applications. En effet, pour certaines applications, la présence d'eau en grande quantité et le comportement de « gel » de la suspension peuvent être un frein.

Il est également recherché un procédé de production qui utilise en outre des produits peu toxiques et peu chers.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Pour atteindre cet objectif, selon un mode de réalisation, la présente invention prévoit un procédé de fabrication d'une suspension de micro/nanofibrilles de cellulose à partir d'une suspension aqueuse de fibres de cellulose comprenant les étapes suivantes :
- un traitement chimique de la suspension aqueuse de fibres de cellulose par au moins un agent de fonctionnalisation, le traitement chimique étant paramétré pour fonctionnaliser les fibres de cellulose à un taux de modification supérieur, voire strictement supérieur, à 1,0 mmol/g, et
- un traitement mécanique, par une extrudeuse bi-vis, de la suspension aqueuse de fibres de cellulose, chaque vis de l'extrudeuse comprenant au moins deux segments de fibrillation (malaxage).

L'agent de fonctionnalisation comprend, de préférence est constitué, de l'ozone.

La suspension aqueuse de fibres de cellulose présente une concentration comprise entre 10% et 50% en poids de matière sèche en entrée de l'extrudeuse.

Le procédé combine au moins deux traitements, un traitement chimique et un traitement mécanique, pour produire des micro/nanofibrilles de cellulose.

L'optimisation de ce procédé repose sur la combinaison :
- d'un taux de modification minimum obtenu par traitement chimique visant à fragiliser les liaisons hydrogènes entre les microfibrilles de cellulose et au sein de chaque fibre de cellulose entre leurs fibrilles et
- de l'utilisation d'une extrudeuse bi-vis dont chaque vis comprend au moins deux segments de fibrillation.

Ce procédé optimisé permet de produire une suspension de micro/nanofibrilles de cellulose de bonne qualité, à haut taux de matière sèche (la concentration en matière sèche de la suspension obtenue, grâce au procédé selon l'invention, est multipliée par 10 par rapport aux procédés industriels existants) et en consommant moins d'énergie que les procédés de l'art antérieur (une réduction de consommation d'énergie comprise entre 5 et 70% est avantageusement obtenue grâce au procédé selon l'invention).

Pour obtenir les avantages susmentionnés, avantageusement un unique passage, voire au maximum deux passages, de la suspension aqueuse de fibres de cellulose fonctionnalisées dans l'extrudeuse bi-vis peut-être, voire est, nécessaire et suffisant.

Ce procédé peut encore être optimisé selon certaines des caractéristiques énoncées ci-dessous, prises isolément ou en combinaison. Notamment, comme indiqué ci-dessous, certaines combinaisons de ces caractéristiques, par exemple certaines combinaisons de deux de ces caractéristiques, permettent une optimisation allant au-delà de la juxtaposition de leur effet individuel, par synergie entre ces caractéristiques.

Avant d'entamer une revue détaillée de modes de réalisation de l'invention, sont énoncées ci-après des caractéristiques optionnelles qui peuvent éventuellement être utilisées en association ou alternativement :
- le traitement chimique peut être paramétré pour fonctionnaliser les fibres de cellulose avec un taux de modification supérieur à 1,3 mmol/g ;
- le traitement chimique peut être paramétré pour fonctionnaliser les fibres de cellulose avec un taux de modification inférieur à 3,0 mmol/g ;
- le traitement chimique peut être paramétré pour fonctionnaliser les fibres de cellulose à un taux de modification compris entre 1,0 mmol/g et 3,0 mmol/g, de préférence compris entre 1,3 mmol/g et 2,1 mmol/g ;
- chaque vis de l'extrudeuse peut comprendre entre 2 et 6, de préférence entre 3 et 5, segments de fibrillation. Le procédé selon ces deux dernières caractéristiques techniques permet de produire une suspension de micro/nanofibrilles de cellulose de qualité, à forte concentration en matière sèche, et en consommant peu d'énergie. Plus particulièrement, ces deux dernières caractéristiques techniques lorsqu'elles sont combinées l'une avec l'autre, notamment dans leur mode de réalisation préférentiel, ont un effet synergique permettant d'atteindre un niveau d'optimisation allant au-delà de la somme des niveaux d'optimisation que ces caractéristiques techniques permettent d'atteindre lorsqu'elles sont considérées séparément l'une de l'autre ;
- la suspension aqueuse de fibres de cellulose fonctionnalisées présente une concentration comprise entre 10 et 30%, de préférence comprise entre 10 et 20%, et encore plus préférentiellement sensiblement égale à 20%, en poids de matière sèche en entrée de l'extrudeuse bi-vis ;
- la suspension de micro/nanofibrilles de cellulose obtenue présente une concentration comprise entre 10 et 30%, de préférence comprise entre 10 et 20%, et encore plus préférentiellement sensiblement égale à 20%, en poids de matière sèche ;
- le traitement mécanique peut comprendre au plus deux passages, de préférence un unique passage, de la suspension aqueuse de fibres de cellulose fonctionnalisées dans l'extrudeuse bi-vis ;
- le traitement chimique peut être suivi et le traitement mécanique peut être précédé d'une étape choisie parmi une étape de concentration ou une étape de dilution de la suspension aqueuse de fibres de cellulose fonctionnalisées, cette étape étant paramétrée de sorte à obtenir une concentration de la suspension aqueuse de fibres de cellulose fonctionnalisées comprise entre 10 et 30%, de préférence comprise entre 10 et 20%, et encore plus préférentiellement sensiblement égale à 20%, en poids de matière sèche en entrée de l'extrudeuse bi-vis. Le procédé selon cette caractéristique permet tout à la fois :
   ∘ d'obtenir un transit de la matière à travers l'extrudeuse bi-vis satisfaisant, notamment en occasionnant peu de surchauffe de la matière et en évitant tout risque de blocage de la matière, lors de son transit dans l'extrudeuse, et
   ∘ d'obtenir en sortie de l'extrudeuse bi-vis une concentration en matière sèche satisfaisante, notamment en termes d'efficacité de transport, mais également en termes de possibilités de post-traitement industriel.
      Ainsi, un compromis optimisé est avantageusement atteint ;
- le traitement chimique peut être suivi et le traitement mécanique peut être précédé d'une étape de lavage de la suspension aqueuse de fibres de cellulose, l'étape de lavage étant paramétrée de sorte à soustraire de la suspension aqueuse de fibres de cellulose fonctionnalisées des résidus de l'agent de fonctionnalisation ;
- l'étape de lavage peut précéder l'étape choisie parmi une étape de concentration ou une étape de dilution ;
- au moins deux segments de fibrillation, de préférence au moins trois segments de fibrillation, de chaque vis de l'extrudeuse bi-vis peuvent être configurés pour générer des taux de cisaillement et des déformations cumulées différents entre eux, de préférence les taux de cisaillement différant entre eux d'un facteur supérieur ou égal à 2 ;
- chaque vis de l'extrudeuse peut comprendre un segment de convoyage d'au moins un côté de chaque segment de fibrillation, de préférence de part et d'autre de chaque segment de fibrillation, de préférence chaque segment de convoyage étant à pas de vis direct et chaque segment de fibrillation étant à pas de vis inverse ;
- chaque segment de fibrillation peut être configuré pour induire, sur la matière en transit dans l'extrudeuse bi-vis, une déformation sensiblement dix fois supérieure à la déformation induite par un segment de convoyage ;
- au moins un segment de fibrillation, de préférence chaque segment de fibrillation, d'au moins l'une des deux vis peut comprendre au moins l'une, voire uniquement l'une, parmi une partie à pas de vis direct et une partie à pas de vis inverse ;
- les deux vis de l'extrudeuse bi-vis sont identiques entre elles ;
- le traitement mécanique peut être réalisé à une température comprise entre 0 et 20°C ;
- le traitement mécanique peut être réalisé avec une vitesse de rotation des vis comprise entre 100 et 500 tr/min ;
- le traitement mécanique est de préférence exempt de tout ajout d'agents chimiques ;
- l'ozone peut être ajouté, voire mélangé à la suspension aqueuse de fibres de cellulose à une concentration comprise entre 10 et 35%, de préférence comprise entre 10 et 15%, de la masse en matière sèche de cellulose, le taux de modification étant supérieur à 1,2 mmol/g, de préférence supérieur à 1,3 mmol/g ;
- le traitement chimique avec ozone peut être réalisé en présence d'un catalyseur comprenant un sel de fer, de préférence un sulfate de fer, à une concentration massique comprise entre 0,01 et 5%, de préférence comprise entre 0,02 et 3% de la masse en matière sèche de cellulose. Le taux de modification est ainsi avantageusement augmenté ;
- avant le traitement chimique, la suspension aqueuse de fibres de cellulose peut présenter une concentration sensiblement égale à 40% en matière sèche ;
- en outre, le procédé peut comprendre, avant le traitement chimique, un prétraitement chimique comprenant le mélange de la suspension aqueuse de fibres de cellulose avec un acide, de préférence un acide sulfurique. Le prétraitement chimique peut être paramétré de sorte que la suspension aqueuse de fibres de cellulose présente un pH strictement inférieur à 4, de préférence compris entre 3,2 et 3,3 ;
- l'étape de traitement chimique peut précéder l'étape de traitement mécanique et être réalisée dans un réacteur, les fibres de cellulose étant fonctionnalisées avant l'étape de traitement mécanique.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un ordinogramme du procédé selon un mode de réalisation de l'invention ;
La figure 2 représente une vue de face des deux vis, juxtaposées entre elles, de l'extrudeuse bi-vis mise en oeuvre selon un mode de réalisation préféré du procédé selon l'invention ;
La figure 3 représente une vue de face de l'une des deux vis illustrées sur la figure 2 ; et
Les figures 4A à 4C représentent des agrandissements des différents segments de fibrillation de la vis illustrée sur la figure 3.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

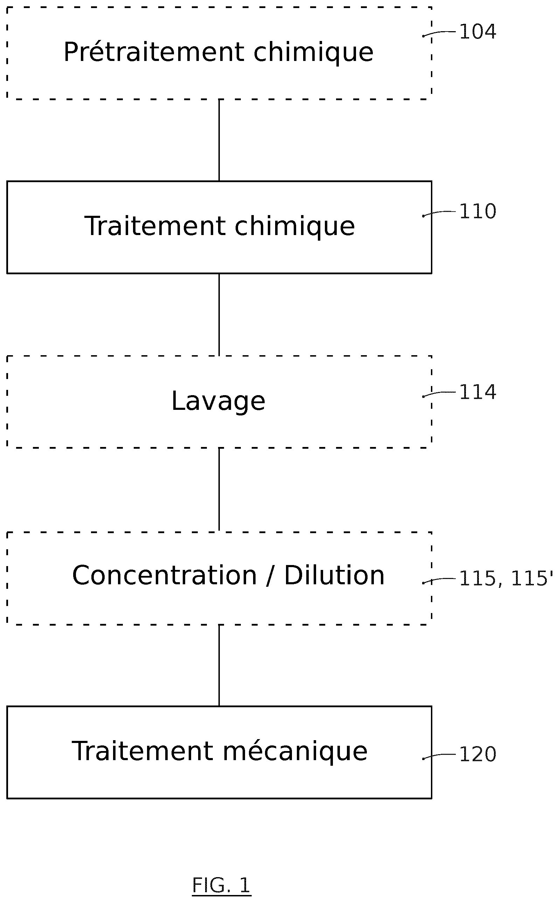

Sur la figure 1, les étapes du procédé encadrées par des traits discontinus peuvent n'être qu'optionnelles.

### DESCRIPTION DÉTAILLÉE

On entend par « cellulose » ou « fibres de cellulose », un polysaccharide qui forme le constituant principal de la paroi cellulaire des tissus végétaux et qui participe à leur soutien et à leur rigidité. La cellulose provient du bois (qui en constitue la principale source), du coton (dont les fibres sont de la cellulose presque pure), du lin, du chanvre et d'autres plantes. C'est également un constituant de plusieurs algues et de quelques mycètes.

On entend par « micro/nanofibrilles de cellulose » ou « micro/nanocellulose », un nanomatériau hétérogène composé d'éléments de taille micrométrique (fragments de fibres) et d'au moins 50% en nombre de nano-objets (c'est-à-dire des objets dont au moins une des dimensions se situe entre 1 et 100 nanomètres). Ce nanomatériau se présente sous la forme d'une collection de micro/nanofibrilles de cellulose isolées ou de faisceaux de micro/nanofibrilles dérivés d'une matière première cellulosique, de la cellulose ou des fibres de cellulose. Il existe plusieurs synonymes largement utilisés pour les micro/nanofibrilles de cellulose : cellulose nanofibrillée (NFC ou CNF pour « Cellulose NanoFibrils » selon la terminologie anglo-saxonne), cellulose microfibrillaire, cellulose nanofibrillaire, nanofibres de cellulose, cellulose microfibrillée (MFC ou CMF pour « Cellulose MicroFibrils » selon la terminologie anglo-saxonne), microfibre de cellulose ou microfibrilles de cellulose. Les termes « micro/nanofibrilles de cellulose » ou « micro/nanocellulose » embrassent ici l'ensemble ou n'importe lequel de ces synonymes. Les micro/nanofibrilles de cellulose présentent au moins une dimension définie à l'échelle nanométrique. Elles ont généralement un diamètre de quelques nanomètres, typiquement compris entre 10 et 60 nm, et possèdent une longueur de quelques micromètres, typiquement comprise entre 500 et 5000 nm. Par exemple, les nanofibrilles de cellulose forment un matériau destiné à être utilisé, du fait de sa très grande rigidité, comme renfort dans la matrice de plusieurs composites.

On entend par « taux de modification » un pourcentage de matériel biologique ou de groupements chimiques ajoutés ou modifiés par rapport au groupement chimiques initiaux, immobilisé sur un support, notamment par liaison covalente. Selon un mode de réalisation de l'invention, le matériel greffé peut comprendre des carbonyles (dont les aldéhydes et/ou les cétones) et le support peut comprendre une fibre de cellulose.

On entend par « extrudeuse bi-vis » une extrudeuse munie de deux vis co-pénétrantes, voire interpénétrantes et corotatives, montées en parallèle dans un fourreau. Le procédé d'extrusion consiste à fabriquer en continu des produits finis ou des semi-produits, ou à transformer des matériaux, au sein d'un système vis/fourreau. On parle d'extrusion mono-vis lorsqu'il existe une vis unique, tournant au sein d'un fourreau cylindrique et on parle d'extrusion bi-vis lorsque l'on a affaire à deux vis, généralement parallèles, tournant à l'intérieur d'un fourreau dont la section a la forme d'un huit. Il existe deux grandes familles d'extrudeuses bi-vis : les extrudeuses corotatives et les extrudeuses contrarotatives. Dans le cas de la présente invention, l'extrudeuse bi-vis appartient à la famille des extrudeuses corotatives dont les vis ont le même sens de rotation. Dans le cas de la présente invention, l'extrudeuse bi-vis comprend plus particulièrement deux vis interpénétrées. Cette géométrie définit, sur chaque vis, des chambres en « C » quasi indépendantes et limite au maximum les échanges de matière entre les différentes chambres. On entend par « segment de fibrillation » un segment d'une vis de l'extrudeuse bi-vis configuré avec des éléments malaxeurs pour fabriquer en continu des produits finis ou des semi-produits, ou à transformer des matériaux, au sein d'un système vis/fourreau, en imposant des forces de cisaillement à la matière transitant autour de ce segment dans le fourreau.

On entend par « segment de convoyage », un segment d'une vis de l'extrudeuse bi-vis configuré avec des éléments de convoyage pour faire transiter la matière dans le fourreau selon une direction orientée de l'entrée vers la sortie de l'extrudeuse bi-vis.

On entend par « une partie ou un sous-segment à pas de vis direct », une partie ou un sous-segment d'un segment de fibrillation d'une vis de l'extrudeuse bi-vis configuré pour privilégier l'amenée de la matière transportée dans l'extrudeuse bi-vis vers la sortie de l'extrudeuse bi-vis.

On entend par « une partie ou un sous-segment à pas de vis inverse », une partie ou un sous-segment d'un segment de fibrillation d'une vis de l'extrudeuse bi-vis configuré pour privilégier l'amenée de la matière transportée dans l'extrudeuse bi-vis vers l'entrée de l'extrudeuse bi-vis.

Chaque segment de fibrillation, ainsi que chaque partie ou sous-segment d'un segment de fibrillation, peut être composé(e) d'une pluralité d'éléments, éléments de convoyage ou des éléments de traitement tels que disques malaxeurs, juxtaposés entre eux le long de l'axe longitudinal de la vis à laquelle ils appartiennent. Entre autres, la configuration angulaire des disques entre eux définit le taux de cisaillement induit sur la matière en transit au sein du segment, de la partie du segment ou du sous-segment.

On entend par « déformation » de la matière en transit dans l'extrudeuse bi-vis une mesure consistant à multiplier le taux de cisaillement local d'un disque ou d'un segment de l'extrudeuse bi-vis par le temps de séjour de la matière dans ce disque ou ce segment.

On entend par « inférieur » et « supérieur », « inférieur ou égal » et supérieur ou égal », respectivement. L'égalité est exclue par l'usage des termes « strictement inférieur » et « strictement supérieur ». Egalement, les expressions du type « égal, inférieur, supérieur » s'entendent de comparaisons pouvant accommoder certaines tolérances, notamment selon l'échelle de grandeur des valeurs comparées et les incertitudes de mesure. Des valeurs sensiblement égales, inférieures ou supérieures entrent dans le cadre d'interprétation de l'invention.

On entend par un paramètre « sensiblement égal/supérieur/inférieur à » une valeur donnée que ce paramètre est égal/supérieur/inférieur à la valeur donnée, à plus ou moins 20 %, voire 10 %, près de cette valeur. On entend par un paramètre « sensiblement compris entre » deux valeurs données que ce paramètre est au minimum égal à la plus petite valeur donnée, à plus ou moins 20 %, voire 10 %, près de cette valeur, et au maximum égal à la plus grande valeur donnée, à plus ou moins 20 %, voire 10 %, près de cette valeur.

La présente invention concerne un procédé de fabrication, et plus particulièrement un procédé de production industrielle, de micro/nanofibrilles de cellulose par un traitement chimique spécifique, suivi d'un traitement mécanique par une extrudeuse bi-vis. Plus particulièrement, le procédé de fabrication 100 selon l'invention permet de fabriquer une suspension de micro/nanofibrilles de cellulose à partir d'une suspension aqueuse de fibres de cellulose.

Dans son acceptation la plus large, et en référence à la figure 1, le procédé comprend une étape de traitement chimique 110, dans un réacteur, de la suspension aqueuse de fibres de cellulose et une étape de traitement mécanique 120 de la suspension aqueuse de fibres de cellulose fonctionnalisées.

Le traitement chimique 110 est réalisé par au moins un agent de fonctionnalisation et paramétré de sorte à fonctionnaliser les fibres de cellulose avec un taux de modification supérieur, voire strictement supérieur, à 1,0 mmol/g, et de préférence supérieure à 1,3 mmol/g. L'agent de fonctionnalisation peut comprendre, ou être constitué, de l'ozone. Par ailleurs, le traitement chimique 110 peut être paramétré de sorte que le taux de modification reste inférieur à 2,0 mmol/g, de préférence inférieur à 1,9 mmol/g. Lorsque la fonctionnalisation des fibres consiste à y greffer des aldéhydes, par préférence aux cétones, les teneurs en aldéhydes peuvent être mesurées par la méthode de l'indice de cuivre selon la norme NF T 2-004.

Industriellement, plusieurs réacteurs peuvent être mis en œuvre afin de pouvoir alimenter en continu une ou plusieurs extrudeuses bi-vis, en commutant d'un réacteur à un autre l'alimentation des extrudeuses en suspension aqueuse de fibres de cellulose fonctionnalisées.

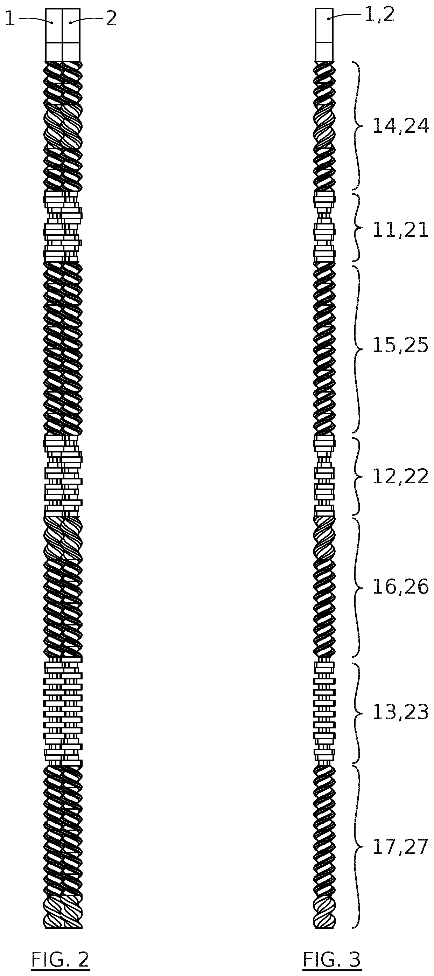

Le traitement mécanique 120 est réalisé par introduction dans une extrudeuse bi-vis de la suspension aqueuse de fibres de cellulose fonctionnalisées par le traitement chimique 110. Plus particulièrement, la suspension aqueuse de fibres de cellulose fonctionnalisées est extraite du réacteur dans lequel a lieu le traitement chimique 110 et introduite dans une trémie particulière située en amont de l'entrée de l'extrudeuse. En référence aux figures 2 et 3, chaque vis 1, 2 de l'extrudeuse bi-vis comprend au moins deux segments de fibrillation 11, 12, 13, 21, 22, 23, et de préférence moins de neuf, voire six segments de fibrillation. Le traitement mécanique 120 est par ailleurs réalisé dans des conditions de température spécifiques, par exemple en utilisant un circuit de refroidissement à eau. Plus particulièrement, des canaux de circulation d'eau peuvent être pratiqués dans le fourreau de l'extrudeuse. Ainsi, l'extrudeuse bi-vis est maintenue à une température, inférieure à 60°C, de préférence comprise entre 0 et 20°C, par exemple sensiblement égale à 10°C. En outre, le traitement mécanique est réalisé avec une vitesse de rotation des vis comprises entre 100 et 500 tr/min, par exemple sensiblement égale à 400 tr/min. L'utilisation d'une extrudeuse bi-vis permet ici une diminution de la consommation énergétique pour la production de nanofibrilles de cellulose comprise entre 5 et 70%, plus particulièrement comprise entre 10 et 60%, comparativement aux traitements mécaniques des procédés industriels actuels. Par ailleurs, bien que les extrudeuses bi-vis permettent et sont généralement utilisées pour mélanger la matière en transit avec au moins un réactif injecté à travers le fourreau, le traitement mécanique 120 est ici de préférence avantageusement exempt de tout ajout d'agents chimiques.

Comme représenté sur la figure 1, le procédé de fabrication selon l'invention peut comprendre d'autres étapes optionnelles.

Une première de ces étapes optionnelles comprend un prétraitement chimique 104. Cette étape de prétraitement 104 précède l'étape de traitement 110. L'étape de prétraitement 104 est paramétrée de sorte que la suspension aqueuse de cellulose soit portée à un pH de préférence inférieure à 4, voire strictement inférieur à 4, de préférence compris entre 3,2 et 3,3. Pour ce faire, elle comprend le mélange de la suspension aqueuse de fibres de cellulose avec un acide, de préférence un acide sulfurique. Toutefois, le traitement à l'ozone est opérationnel y compris lorsqu'il est réalisé sur une suspension à un pH neutre ou à un pH basique.

Une deuxième étape optionnelle consiste en une étape de lavage 114 de la suspension aqueuse de fibres de cellulose fonctionnalisées. Cette deuxième étape optionnelle a donc lieu après l'étape de traitement chimique 110. Elle a également lieu avant l'étape de traitement mécanique 120. En effet, une fois la nanofibrillation effectuée via le traitement mécanique 120, il n'est plus possible d'opérer des étapes successives de dilution et de concentration qui permettrait de laver la suspension de micro/nanofibrilles de cellulose produite. L'étape de lavage 114 doit donc être réalisée avant que des micro/nanofibrilles de cellulose ne soient produites, soit avant le traitement mécanique 120. Cette étape de lavage 114 peut être nécessaire, ou à tout le moins recommandée, en vue de certaines applications visées, et notamment des applications médicales ou cosmétiques. Au contraire, pour d'autres applications visées, il peut être préférable de ne pas implémenter cette étape de lavage 114. L'étape de lavage 114, lorsqu'elle est implémentée, est de préférence paramétrée de sorte à soustraire, de la suspension aqueuse de fibres de cellulose fonctionnalisées, des résidus de l'agent de fonctionnalisation utilisé lors du traitement chimique 110. Elle peut, en outre, être paramétrée de sorte à soustraire de ladite suspension d'autres résidus, par exemple issus de l'étape optionnelle de prétraitement chimique 104.

Le traitement chimique 110 peut être suivi et le traitement mécanique 120 peut être précédé d'une étape optionnelle choisie parmi une étape de concentration 115 ou une étape de dilution 115' de la suspension aqueuse de fibres de cellulose fonctionnalisées. Cette étape 115, 115' peut être paramétrée de sorte à obtenir une concentration de la suspension aqueuse de fibres de cellulose fonctionnalisées comprise entre 10 et 50%, de préférence comprise entre 10 et 40%, voire entre 10 et 30 %, voire entre 10 et 20 %, et encore plus préférentiellement sensiblement égale à 20%, en poids de matière sèche en entrée de l'extrudeuse bi-vis. Selon un exemple, l'étape de lavage 114 peut précéder l'étape choisie parmi une étape de concentration 115 ou une étape de dilution 115'.

La suspension aqueuse de fibres de cellulose fonctionnalisées peut présenter une concentration comprise entre 10 et 30%, de préférence comprise entre 10 et 20%, et encore plus préférentiellement sensiblement égale à 20%, en poids de matière sèche. C'est cette suspension de concentration contrôlée en poids de matière sèche qui sera introduite en entrée de l'extrudeuse bi-vis. A ces concentrations contrôlées, le transit de la matière à travers l'extrudeuse bi-vis, depuis son entrée jusqu'à sa sortie, est satisfaisant, notamment en ce qu'il n'occasionne que peu de surchauffe de la matière en transit et en ce qu'il ne présente aucun risque, ou du moins un risque limité, de blocage de la matière. L'on obtient ainsi en sortie de l'extrudeuse bi-vis une suspension de micro/nanofibrilles de cellulose présentant un taux de matière sèche équivalent, et plus particulièrement égale, à la concentration de la suspension de fibres de cellulose fonctionnalisées introduite dans l'extrudeuse bi-vis. À ces concentrations, il ressort que le procédé selon l'invention a des avantages indéniables en termes de coûts de production, de coûts de stockage, de coûts de transport et d'applications et apparaît comme une bonne alternative pour l'industrialisation de la production de nanofibrilles de cellulose.

Selon un mode de réalisation préféré de l'invention, le traitement chimique 110 est paramétré pour fonctionnaliser les fibres de cellulose à un taux de modification supérieur à 1,3 mmol/g et chaque vis 1, 2 de l'extrudeuse comprend entre 3 et 5 segments de fibrillation. Le procédé selon ce mode de réalisation préféré permet de produire des nanofibrilles de cellulose de qualité, à fort taux de matière sèche, et en consommant peu d'énergie. En effet, les inventeurs ont constaté que, dans ce mode de réalisation préféré de l'invention, la combinaison de ces caractéristiques techniques induit un effet allant au-delà des effets additionnés de chacune de ces caractéristiques prises isolément l'une de l'autre. Il y a donc, dans ce mode de réalisation préféré de l'invention, un effet synergique qui ne semble pas pouvoir être prévu a priori.

Notamment, là où d'autres méthodes de fonctionnalisation des fibres de cellulose conduisent à la nécessité de mettre en œuvre l'étape de traitement mécanique 120 environ sept fois de suite, la combinaison du traitement chimique 110 et du traitement mécanique 120 tels que décrits plus haut permet d'obtenir une suspension de micro/nanofibrilles de cellulose de qualité, dès le premier passage de la suspension aqueuse de fibres de cellulose fonctionnalisées dans l'extrudeuse bi-vis. Il reste tout de même envisageable d'effectuer plusieurs de ces passages. Notamment, un deuxième passage n'est pas exclu. Évidemment, la réduction du nombre de passages dans l'extrudeuse bi-vis contribue à l'économie d'énergie réalisée de sorte qu'un seul passage est de ce point de vue préférable à deux passages.

La figure 2 représente les deux vis de l'extrudeuse bi-vis de laboratoire interpénétrées l'une dans l'autre. Les deux vis illustrées sont identiques entre elles.

Comme représenté sur les figures 2 et 3, les segments de fibrillation 11, 12, 13, 21, 22, 23 sont de préférence différents entre eux. Plus particulièrement, ils présentent des taux de cisaillement et des déformations cumulées différents entre eux. Par exemple, les taux de cisaillement peuvent différer entre eux d'un facteur supérieur ou égal à deux. En alternative, les segments de fibrillation peuvent être identiques entre eux.

En outre, chaque segment de fibrillation peut comprendre un sous-segment à pas de vis direct, puis un sous-segment à pas de vis inverse, agencé relativement l'un par rapport à l'autre d'amont en aval de l'extrudeuse bi-vis, de sorte à retenir la matière transitant dans l'extrudeuse au niveau du segment de fibrillation. Le temps de transit de la matière au niveau de chaque segment de fibrillation est ainsi avantageusement accru, pour une meilleure nanofibrillation des fibres de cellulose fonctionnalisées, en sortie dudit segment.

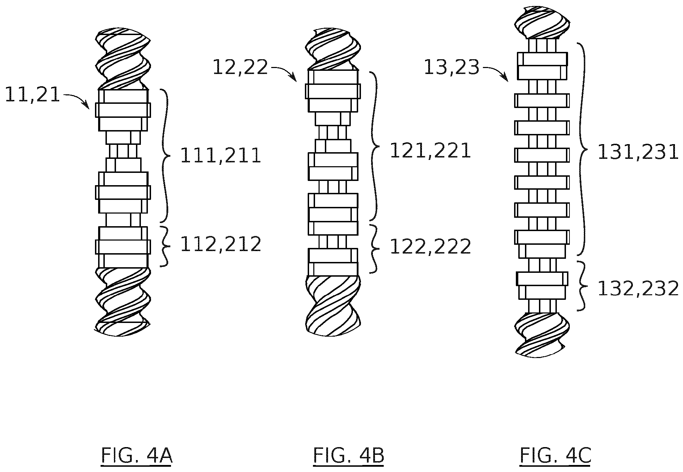

La configuration de chaque vis telle qu'illustrée sur les figures 2 et 3 montre que les trois segments de fibrillation sont différents entre eux. Plus particulièrement, en référence aux figures 4A à 4C :
- le premier segment de fibrillation 11, 21 peut comporter un premier sous-segment 111, 211 comprenant dix disques identiques entre eux et successivement agencés entre eux de sorte que deux disques adjacents présentent un décalage angulaire sensiblement égal à 30°. Ce premier sous-segment 111, 211 peut être complété d'un second sous-segment 112, 212 comprenant trois disques supplémentaires, agencés de sorte à présenter également un décalage angulaire sensiblement égal à 30° deux à deux, mais de sorte à générer un pas de vis inverse par rapport au pas de vis direct généré par le premier sous-segment 111, 211 ;
- le deuxième segment de fibrillation 12, 22 peut comprendre deux sous-segments comprenant quinze disques au total. Le premier sous-segment 121, 221 comporte les sept premiers disques agencés en pas de vis direct avec un décalage angulaire sensiblement égal à 30° deux à deux et les quatre disques intermédiaires agencés en pas de vis direct avec un décalage angulaire sensiblement égal à 60° deux à deux. Le deuxième sous-segment 122, 222 comprend les quatre derniers disques agencés en pas de vis inverse avec un décalage angulaire sensiblement égal à 60° deux à deux ;
- le troisième segment de fibrillation 13, 23 peut comprendre deux sous-segments comprenant vingt disques au total. Le premier sous-segment 131, 231 comporte les quatre premiers disques agencés en pas de vis direct avec un décalage angulaire sensiblement égal à 60° deux à deux et les douze disques intermédiaires agencés en pas de vis direct avec un décalage angulaire sensiblement égal à 90° deux à deux. Le deuxième sous-segment 132, 232 comporte les quatre derniers disques agencés en pas de vis inverse avec un décalage angulaire sensiblement égal à 60° deux à deux.

On notera qu'une telle configuration des vis semble aujourd'hui incompatible avec l'utilisation de vis coniques.

Comme représenté sur les figures 2 et 3, chaque segment de fibrillation comprend de part et d'autre un segment de convoyage 14, 15, 16, 17, 24, 25, 26, 27. Les segments de convoyage sont configurés pour convoyer la matière transitant dans l'extrudeuse bi-vis respectueusement depuis l'entrée de l'extrudeuse jusqu'au premier segment de fibrillation, depuis le premier segment de fibrillation jusqu'au deuxième segment de fibrillation, depuis le deuxième segment de fibrillation jusqu'au troisième segment de fibrillation, et depuis le troisième segment de fibrillation jusqu'à la sortie de l'extrudeuse bi-vis. Chaque segment de convoyage peut par exemple être configuré à la façon d'une vis sans fin. Par ailleurs, chaque segment de convoyage peut être configuré pour induire, sur la matière en transit dans l'extrudeuse bi-vis, une déformation sensiblement dix fois inférieure à la déformation induite par un segment de fibrillation.

L'étape de traitement chimique 110 est plus particulièrement décrite ci-dessous. Elle est propre à permettre la fonctionnalisation des fibres de cellulose de la suspension aqueuse avec les taux de modification susmentionnés.

Elle consiste à utiliser, comme agent de fonctionnalisation, un agent oxydant, et en particulier de l'ozone, le cas échéant en présence d'un catalyseur comprenant un sel de fer, et de préférence un sulfate de fer. Il s'agit d'une réaction d'ozonation. Les fibres de cellulose sont alors fonctionnalisées par greffage de carbonyles. L'utilisation d'un catalyseur, et en particulier d'un sel de fer, permet d'augmenter le taux de modification des fibres de cellulose lors du traitement chimique 110 et permet ainsi de réduire davantage l'énergie consommée lors de l'étape subséquente de traitement mécanique 120 et d'augmenter la qualité des suspensions de micro/nanofibrilles de cellulose obtenues grâce au procédé selon l'invention. Plus particulièrement, l'ozone est mélangé à la suspension aqueuse de cellulose à une concentration massique en ozone comprise entre 10 et 35 %, de préférence comprise entre 10 et 15%, de la masse en matière sèche de cellulose ; et le cas échéant, le sel de fer est présent à une concentration massique comprise entre 0,01 et 5%, de préférence comprise entre 0,02 et 3%, de la masse en matière sèche de cellulose. Typiquement, la suspension aqueuse de fibres de cellulose présente alors, avant le traitement chimique 110, une concentration sensiblement égale à 40% en matière sèche. Le traitement chimique 110 est ainsi réalisé sur une suspension à forte concentration en matière sèche ce qui permet de limiter la consommation en eau. De plus, l'ozone est un produit peu toxique et peu cher, son utilisation permet une diminution des déchets produits chimiques dangereux, et l'ozonation est un processus disponible industriellement. Notamment, l'ozone peut être produit dans un ozoneur, puis injecté (en mélange avec de l'oxygène), au moyen d'un tuyau, dans le réacteur où a lieu le traitement chimique 110. Le temps nécessaire au traitement chimique 110 est régi par le débit d'ozone injecté dans le réacteur.

Le traitement chimique 110 selon l'invention étant réalisé à partir d'une suspension à une concentration de 5% ou de 50 %, voire de 40% en matière sèche représente à lui seul un gain en productivité, du fait que les procédés industriels mis en œuvre actuellement sont réalisés à partir de suspensions à une concentration de 2% en matière sèche.

Un exemple de réalisation du procédé selon l'invention est décrit ci-dessous.

Selon cet exemple, une suspension aqueuse de fibres de cellulose à 40% en poids de matière sèche est mélangée avec de l'ozone à une concentration massique comprise entre 10 et 25 %, de préférence comprise entre 11 et 18%, par rapport à la masse en matière sèche de fibres, et avec un catalyseur FeSO4 avec une concentration massique comprise entre 0,01 et 5 %, de préférence comprise entre 0,01 et 2%, par rapport à la masse en matière sèche de fibres. Le traitement chimique 110 est paramétré de sorte à obtenir un taux de modification supérieur à 1,0 mmol/g, de préférence supérieur à 1,3 mmol/g. Suite au traitement chimique 110, la suspension aqueuse de fibres de cellulose est lavée 114, puis diluée de sorte que sa concentration soit comprise entre 10 et 30 %, et de préférence comprise entre 15 et 20%, en poids de matière sèche. La suspension aqueuse de fibres de cellulose ainsi obtenue est insérée dans une extrudeuse bi-vis comprenant entre trois et cinq segments de fibrillation avec des sous-segments à pas de vis inverse, en étant maintenue à une température comprise entre 0 et 20°C, et une vitesse de rotation des vis comprises entre 100 et 500 tr/min. La réduction d'énergie consommée est alors sensiblement égale à 20% par rapport à un traitement enzymatique classique.

L'invention n'est pas limitée aux modes de réalisations précédemment décrits et s'étend à tous les modes de réalisation couverts par les revendications.

L'extrudeuse bi-vis décrite plus haut est davantage une extrudeuse de laboratoire développée pour prouver la faisabilité du procédé selon l'invention et montrer ce qu'il permet d'obtenir, plutôt qu'une extrudeuse industrielle. Notamment, une extrudeuse industrielle peut ne pas comprendre de sous-segments à assembler entre eux pour former en particulier un segment de fibrillation, mais comprend plutôt une alternance de segments de convoyage et de fibrillation. par exemple non amovibles entre eux, les segments de convoyage étant à pas de vis direct et les segments de fibrillation étant à pas de vis inverse. En alternative ou en complément, les segments de convoyage à pas de vis direct peuvent être agencés de part et d'autre de chaque segment de fibrillation. Une extrudeuse industrielle employable pour mettre en oeuvre le procédé selon l'invention est par exemple celle développée et commercialisée par la société Clextral sous la référence BC-21.

Par ailleurs, le traitement chimique et le traitement mécanique sont décrits ci-dessus comme se succédant. Ceci peut ne pas être le cas. En alternative ou en complément, il est envisagé que de l'ozone soit injecté directement dans l'extrudeuse pendant que la suspension aqueuse de fibres de cellulose y est elle-même en transit. Le traitement chimique et le traitement mécanique sont alors au moins en partie concomitants entre eux.

La suspension aqueuse de fibres de cellulose, préalablement au et/ou lors du traitement chimique, voire la suspension aqueuse de fibres de cellulose fonctionnalisées, peut présenter une concentration supérieure à 10 %, voire supérieure à 20%, voire supérieure à 30 % en poids de matière sèche. De façon additionnelle ou alternative, cette concentration peut être inférieure à 50 %, voire à inférieure à 40 % en poids de matière sèche. La suspension de fibres de cellulose, de concentration contrôlée en poids de matière sèche peut être introduite en entrée de l'extrudeuse bi-vis.

La suspension aqueuse de fibres de cellulose, notamment fonctionnalisées, présente une concentration supérieure à 10 %, voire supérieure à 20%, voire supérieure à 30 %, en poids de matière sèche, en entrée de l'extrudeuse bi-vis. De façon additionnelle, cette concentration est inférieure à 50 %, voire à inférieure à 40 %, en poids de matière sèche. La suspension aqueuse de fibres de cellulose, notamment fonctionnalisées, présente une concentration comprise entre 10 et 50%, de préférence comprise entre 20 et 40%, et encore plus préférentiellement entre 30 % et 40 %, en poids de matière sèche en entrée de l'extrudeuse bi-vis. Plus cette concentration est haute, plus la teneur en eau est limitée et plus la concentration en matière sèche en sortie de l'extrudeuse bi-vis est satisfaisante, notamment en termes d'efficacité de transport, mais également en termes de possibilités de post-traitement industriel. Une concentration de la suspension supérieure à 20 % facilite le traitement mécanique dans l'extrudeuse bi-vis. Les valeurs maximales de cette concentration permettent de limiter la surchauffe de la matière et un éventuel risque de blocage de la matière, lors de son transit dans l'extrudeuse. Plus les valeurs maximales sont basses, plus cette surchauffe de la matière et cet éventuel risque de blocage sont limités.

L'extrudeuse bi-vis, et plus particulièrement le fourreau peut être maintenu à une température inférieure à 60°C, de préférence comprise entre 10 et 30°C, voire entre 10 et 20°C, par exemple sensiblement égale à 20°C. Le traitement mécanique peut être réalisé avec une vitesse de rotation des vis comprise préférentiellement entre 100 et 1200 tr/min.

La suspension obtenue après le traitement mécanique peut présenter une concentration comprise entre 10 et 50%, de préférence comprise entre 10 et 40%, voire comprise entre 20 et 40% en poids de matière sèche.

Le procédé peut en outre être exempt d'une étape de séchage entre le traitement chimique 110 et le traitement mécanique 120. Plus particulièrement, le procédé peut en outre être exempt d'une étape de séchage par laquelle la proportion en eau de la suspension aqueuse de fibres de cellulose fonctionnalisées serait réduite pour être inférieure à 30 %, voire inférieure à 20 %, en masse par rapport à la masse totale de la suspension. De façon équivalente, le procédé peut comprendre une étape de séchage par laquelle la proportion en eau de la suspension aqueuse de fibres de cellulose fonctionnalisées reste supérieure à 20 %, voire supérieure à 30 %, en masse par rapport à la masse totale de la suspension, depuis le traitement chimique 110 jusqu'au traitement mécanique 120.

Préalablement au traitement chimique 110, le procédé peut être exempt d'un prétraitement des fibres de cellulose par carboxyméthylation. Ainsi, le procédé est simplifié tout en limitant la détérioration des fibres de cellulose pouvant être occasionnée par un prétraitement additionnel.

## Revendications

1. Procédé de fabrication (100) d'une suspension de micro/nanofibrilles de cellulose à partir d'une suspension aqueuse de fibres de cellulose comprenant les étapes suivantes :
- un traitement chimique (110) de la suspension aqueuse de fibres de cellulose par au moins un agent de fonctionnalisation, le traitement chimique (110) étant paramétré pour fonctionnaliser les fibres de cellulose à un taux de modification supérieur à 1,0 mmol/g, et
- un traitement mécanique (120), par une extrudeuse bi-vis, de la suspension aqueuse de fibres de cellulose, chaque vis (1, 2) de l'extrudeuse comprenant au moins deux segments de fibrillation (11, 12, 13, 21, 22, 23), dans lequel l'agent de fonctionnalisation comprend de l'ozone et dans lequel la suspension aqueuse de fibres de cellulose présente une concentration comprise entre 10 % et 50 % en poids de matière sèche en entrée de l'extrudeuse bi-vis.

2. Procédé (100) selon la revendication précédente, dans lequel le traitement chimique (110) est paramétré pour fonctionnaliser les fibres de cellulose à un taux de modification compris entre 1,0 mmol/g et 3,0 mmol/g.

3. Procédé (100) selon l'une quelconque des revendications précédentes, dans lequel chaque vis (1, 2) de l'extrudeuse comprend entre 2 et 6 segments de fibrillation (11, 12, 13, 21, 22, 23).

4. Procédé (100) selon l'une quelconque des revendications précédentes, dans lequel le traitement mécanique (120) comprend au plus deux passages de la suspension aqueuse de fibres de cellulose fonctionnalisées dans l'extrudeuse bi-vis.

5. Procédé (100) selon l'une quelconque des revendications précédentes, dans lequel le traitement chimique (110) est suivi et le traitement mécanique (120) est précédé d'une étape choisie parmi une étape de concentration (115) ou une étape de dilution (115') de la suspension aqueuse de fibres de cellulose fonctionnalisées, cette étape (115 ou 115') étant paramétrée de sorte à obtenir une concentration de la suspension aqueuse de fibres de cellulose fonctionnalisées comprise entre 10 et 50% en poids de matière sèche en entrée de l'extrudeuse bi-vis.

6. Procédé (100) selon l'une quelconque des revendications précédentes, dans lequel le traitement chimique (110) est suivi et le traitement mécanique (120) est précédé d'une étape de lavage (114) de la suspension aqueuse de fibres de cellulose, l'étape de lavage étant paramétrée de sorte à soustraire de la suspension aqueuse de fibres de cellulose fonctionnalisées des résidus de l'agent de fonctionnalisation.

7. Procédé (100) selon les revendications 5 et 6, dans lequel l'étape de lavage (114) précède l'étape choisie parmi une étape de concentration (115) ou une étape de dilution (115').

8. Procédé (100) selon l'une quelconque des revendications précédentes, dans lequel au moins deux segments de fibrillation (11, 12, 13, 21, 22, 23) de chaque vis (1, 2) de l'extrudeuse bi-vis sont configurés pour générer des taux de cisaillement et des déformations cumulées différents entre eux.

9. Procédé (100) selon l'une quelconque des revendications précédentes, dans lequel les vis (1, 2) de l'extrudeuse comprennent un segment de convoyage (14, 15, 16, 17, 24, 25, 26, 27) d'au moins un côté de chaque segment de fibrillation (11, 12, 13, 21, 22, 23).

10. Procédé (100) selon l'une quelconque des revendications précédentes, dans lequel au moins un segment de fibrillation (11, 12, 13, 21, 22, 23) d'au moins l'une des deux vis (1, 2) comprend au moins l'une parmi une partie à pas de vis direct (111, 121, 131, 211, 221, 231) et une partie à pas de vis inverse (112, 122, 132, 212, 222, 232).

11. Procédé (100) selon l'une quelconque des revendications précédentes, dans lequel l'ozone est mélangé à la suspension aqueuse de fibres de cellulose à une concentration massique comprise entre 10 et 35% de la masse en matière sèche de cellulose, le taux de modification étant supérieur à 1,2 mmol/g.

12. Procédé (100) selon l'une quelconque des revendications précédentes, dans lequel le traitement chimique avec ozone (110) est réalisé en présence d'un catalyseur comprenant un sel de fer à une concentration massique comprise entre 0,01 et 5% de la masse en matière sèche de cellulose.

13. Procédé (100) selon l'une quelconque des revendications précédentes, dans lequel, avant le traitement chimique (110), la suspension aqueuse de fibres de cellulose présente une concentration sensiblement égale à 40% en matière sèche.

14. Procédé (100) selon l'une quelconque des revendications précédentes, comprenant, avant le traitement chimique (110), un prétraitement chimique (104) comprenant le mélange de la suspension aqueuse de fibres de cellulose avec un acide le prétraitement chimique (104) étant paramétré de sorte que la suspension aqueuse de fibres de cellulose présente un pH strictement inférieur à 4.

15. Procédé (100) selon l'une quelconque des revendications précédentes, dans lequel l'étape de traitement chimique (110) précède l'étape de traitement mécanique (120) et est réalisée dans un réacteur, les fibres de cellulose étant fonctionnalisées avant l'étape de traitement mécanique (120).

## Patentansprüche

1. Verfahren zur Herstellung (100) einer Suspension aus Cellulose-Mikro-/Nanofibrillen aus einer wässrigen Cellulosefasersuspension, umfassend die folgenden Schritte:
- eine chemische Behandlung (110) der wässrigen Cellulosefasersuspension mit mindestens einem Funktionalisierungsmittel, wobei die chemische Behandlung (110) so eingestellt ist, dass die Cellulosefasern mit einer Änderungsrate von mehr als 1,0 mmol/g funktionalisiert werden, und
- eine mechanische Behandlung (120) der wässrigen Cellulosefasersuspension durch einen Doppelschneckenextruder, wobei jede Schnecke (1, 2) des Extruders mindestens zwei Fibrillationssegmente (11, 12, 13, 21, 22, 23) umfasst, wobei das Funktionalisierungsmittel Ozon umfasst und wobei die wässrige Cellulosefasersuspension eine Konzentration zwischen 10 Gew.-% und 50 Gew.-% Trockenmasse an dem Eingang des Doppelschneckenextruders aufweist.

2. Verfahren (100) nach dem vorhergehenden Anspruch, wobei die chemische Behandlung (110) so eingestellt ist, dass die Cellulosefasern mit einer Änderungsrate zwischen 1,0 mmol/g und 3,0 mmol/g funktionalisiert werden.

3. Verfahren (100) nach einem der vorhergehenden Ansprüche, wobei jede Schnecke (1, 2) des Extruders zwischen 2 und 6 Fibrillationssegmente (11, 12, 13, 21, 22, 23) umfasst.

4. Verfahren (100) nach einem der vorhergehenden Ansprüche, wobei die mechanische Behandlung (120) höchstens zwei Durchgänge der wässrigen Suspension von funktionalisierten Cellulosefasern in dem Doppelschneckenextruder umfasst.

5. Verfahren (100) nach einem der vorhergehenden Ansprüche, wobei der chemischen Behandlung (110) ein Schritt folgt und dieser der mechanischen Behandlung (120) vorausgeht, der aus einem Konzentrationsschritt (115) oder einem Verdünnungsschritt (115') der wässrigen Suspension von funktionalisierten Cellulosefasern ausgewählt ist, wobei dieser Schritt (115 oder 115') so eingestellt ist, dass er eine Konzentration der wässrigen Suspension aus funktionalisierten Cellulosefasern zwischen 10 und 50 Gew.-% Trockenmasse an dem Eingang des Doppelschneckenextruders erzielt.

6. Verfahren (100) nach einem der vorhergehenden Ansprüche, wobei der chemischen Behandlung (110) ein Waschschritt (114) der wässrigen Cellulosefasersuspension folgt und dieser der mechanischen Behandlung (120) vorausgeht, wobei der Waschschritt so eingestellt ist, dass er die Rückstände des Funktionalisierungsmittels aus der wässrigen Suspension von funktionalisierten Cellulosefasern entfernt.

7. Verfahren (100) nach Anspruch 5 und 6, wobei der Waschschritt (114) dem aus einem Konzentrationsschritt (115) oder einem Verdünnungsschritt (115') ausgewählten Schritt vorausgeht.

8. Verfahren (100) nach einem der vorhergehenden Ansprüche, wobei mindestens zwei Fibrillationssegmente (11, 12, 13, 21, 22, 23) jeder Schnecke (1, 2) des Doppelschneckenextruders so konfiguriert sind, dass sie unterschiedliche Scherraten und kumulative Verformungen untereinander erzeugen.

9. Verfahren (100) nach einem der vorhergehenden Ansprüche, wobei die Schnecken (1, 2) des Extruders ein Fördersegment (14, 15, 16, 17, 24, 25, 26, 27) von mindestens einer Seite jedes Fibrillationssegments (11, 12, 13, 21, 22, 23) umfassen.

10. Verfahren (100) nach einem der vorhergehenden Ansprüche, wobei mindestens ein Fibrillationssegment (11, 12, 13, 21, 22, 23) mindestens einer der beiden Schnecken (1, 2) mindestens einen von einem Teil mit Rechtsgewinde (111, 121, 131, 211, 221, 231) und einem Teil mit Linksgewinde (112, 122, 132, 212, 222, 232) umfasst.

11. Verfahren (100) nach einem der vorhergehenden Ansprüche, wobei Ozon mit der wässrigen Suspension von Cellulosefasern in einer Massenkonzentration zwischen 10 und 35 Masse-% der Cellulosetrockenmasse gemischt wird, wobei die Änderungsrate größer als 1,2 mmol/g ist.

12. Verfahren (100) nach einem der vorhergehenden Ansprüche, wobei die chemische Behandlung mit Ozon (110) in Gegenwart eines Katalysators durchgeführt wird, der ein Eisensalz mit einer Massenkonzentration zwischen 0,01 und 5 Masse-% der Cellulosetrockenmasse umfasst.

13. Verfahren (100) nach einem der vorhergehenden Ansprüche, wobei die wässrige Suspension aus Cellulosefasern vor der chemischen Behandlung (110) eine Konzentration aufweist, die im Wesentlichen gleich 40 % der Trockenmasse ist.

14. Verfahren (100) nach einem der vorhergehenden Ansprüche, umfassend, vor der chemischen Behandlung (110), eine chemische Vorbehandlung (104), die das Mischen der wässrigen Suspension aus Cellulosefasern mit einer Säure umfasst, wobei die chemische Vorbehandlung (104) so eingestellt ist, dass die wässrige Suspension aus Cellulosefasern einen pH-Wert von strikt unter 4 aufweist.

15. Verfahren (100) nach einem der vorhergehenden Ansprüche, wobei der chemische Behandlungsschritt (110) dem mechanischen Behandlungsschritt (120) vorausgeht und in einem Reaktor durchgeführt wird, wobei die Cellulosefasern vor dem mechanischen Behandlungsschritt (120) funktionalisiert werden.

## Claims

1. Method (100) for producing a suspension of cellulose micro/nanofibrils from an aqueous suspension of cellulose fibres, comprising the following steps:
- chemically treating (110) the aqueous suspension of cellulose fibres by at least one functionalising agent, the chemical treatment (110) being configured to functionalise the cellulose fibres at a modification rate greater than 1.0 mmol/g, and mechanically treating (120) the aqueous suspension of cellulose fibres using a twin-screw extruder, each screw (1, 2) of the extruder comprising at least two fibrillation segments (11, 12, 13, 21, 22, 23), wherein the functionalisation agent comprises ozone and wherein the aqueous suspension of cellulose fibres has a concentration of between 10% and 50% by weight dry matter at the inlet of the twin-screw extruder.

2. Method (100) according to the preceding claim, wherein the chemical treatment (110) is configured to functionalise the cellulose fibres at a modification rate of between 1.0 mmol/g and 3.0 mmol/g.

3. Method (100) according to any one of the preceding claims, wherein each screw (1, 2) of the extruder comprises between 2 and 6 fibrillation segments (11, 12, 13, 21, 22, 23).

4. Method (100) according to any one of the preceding claims, wherein the mechanical treatment (120) comprises at most two passages of the aqueous suspension of functionalised cellulose fibres in the twin-screw extruder.

5. Method (100) according to any one of the preceding claims, wherein the chemical treatment (110) is followed and the mechanical treatment (120) is preceded by a step selected from a step (115) of concentrating or a step (115') of diluting the aqueous suspension of functionalised cellulose fibres, this step (115 or 115') being configured so as to obtain a concentration of the aqueous suspension of functionalised cellulose fibres of between 10 and 50% by weight dry matter at the inlet of the twin-screw extruder.

6. Method (100) according to any one of the preceding claims, wherein the chemical treatment (110) is followed by and the mechanical treatment (120) is preceded by a step (114) of washing the aqueous suspension of cellulose fibres, the washing step being configured to remove residues of the functionalising agent from the aqueous suspension of functionalised cellulose fibres.

7. Method (100) according to claims 5 and 6, wherein the washing step (114) precedes the step selected from a concentration step (115) or a dilution step (115').

8. Method (100) according to any one of the preceding claims, wherein at least two fibrillation segments (11, 12, 13, 21, 22, 23) of each screw (1, 2) of the twin-screw extruder are configured to generate different shear rates and cumulative deformations relative to one another.

9. Method (100) according to any one of the preceding claims, wherein the screws (1, 2) of the extruder comprise a conveying segment (14, 15, 16, 17, 24, 25, 26, 27) on at least one side of each fibrillation segment (11, 12, 13, 21, 22, 23).

10. Method (100) according to any one of the preceding claims, wherein at least one fibrillation segment (11, 12, 13, 21, 22, 23) of at least one of the two screws (1, 2) comprises at least one from a direct thread portion (111, 121, 131, 211, 221, 231) and a reverse thread portion (112, 122, 132, 212, 222, 232).

11. Method (100) according to any one of the preceding claims, wherein ozone is mixed with the aqueous suspension of cellulose fibres at a mass concentration of between 10% and 35% of the mass of dry matter of cellulose, the modification rate exceeding 1.2 mmol/g.

12. Method (100) according to any one of the preceding claims, wherein the chemical treatment with ozone (110) is conducted in the presence of a catalyst comprising an iron salt at a mass concentration of between 0.01 and 5% of the mass of dry matter of cellulose.

13. Method (100) according to any one of the preceding claims, wherein, prior to the chemical treatment (110), the aqueous suspension of cellulose fibres has a concentration substantially equal to 40% in dry matter.

14. Method (100) according to any one of the preceding claims, comprising, prior to the chemical treatment (110), a chemical pre-treatment (104) comprising mixing the aqueous suspension of cellulose fibres with an acid, the chemical pre-treatment (104) being configured such that the aqueous suspension of cellulose fibres has a pH of strictly less than 4.

15. Method (100) according to any one of the preceding claims, wherein the chemical treatment step (110) precedes the mechanical treatment step (120) and is carried out in a reactor, the cellulose fibres being functionalised before the mechanical treatment step (120).
